# EUROPEAN PATENT APPLICATION

(11) **EP 4 475 281 A1**
(43) Date of publication of application: **11.12.2024**
(21) Application number: 23865894.2
(22) Date of filing: 15.09.2023
(51) Int. Cl.: H01M 10/6564, H01M 10/6569, H01M 10/6556, H01M 10/6568, H01M 10/613, H01M 10/48, H01M 10/42, H01M 50/204, A62C 99/00

(54) **BATTERY PACK**

(30) Priority: 16.09.2022 KR 20220117231
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); JANG, Byung Do, Daejeon 34122 (KR); YANG, Chang Hyeon, Daejeon 34122 (KR)
(74) Representative: Plasseraud IP
(86) International application number: PCT/KR2023/013902
(87) International publication number: WO 2024/058598

(57) **Abstract**

The present invention relates to a battery pack for accommodating battery modules, including a pack case including a module area havinga battery module seated therein. The pack case includes a base plate having a hollow shape in which the inside is empty; and a side wall coupled along a edge of the base plate, wherein the base plate has a high-pressure vaporized gas filled inside the hollow.

## Description

This application claims the benefit of priority based on Korean Patent Application No. 10-2022-0117231, filed on September 16, 2022, and the entire contents of the Korean patent application are incorporated herein by reference.

### [Technical Field]

The present invention relates to a battery pack accommodating a battery module, and more specifically, the battery pack of the present invention is characterized in that it is capable of rapidly cooling a battery module accommodated therein by vaporizing a vaporized gas filled at high pressure in the event of thermal runaway.

### [Background Art]

The types of secondary batteries that are currently widely used include lithium-ion batteries, lithium polymer batteries, nickel-cadmium batteries, nickel-hydrogen batteries, and nickel-zinc batteries. The operating voltage of these unit secondary battery cells, i.e., unit battery cell, is about 2.5V to 4.5V. Therefore, if a higher output voltage is required, a plurality of battery cells may be connected in series to form a battery pack. Also, depending on the charge and discharge capacity required for the battery pack, a plurality of battery cells may be connected in parallel to form a battery pack. Thus, the number of battery cells included in a battery pack may be varied depending on the required output voltage or charge/discharge capacity.

When forming a battery pack by connecting a plurality of battery cells in series/parallel, it is common practice to first configure a battery module containing at least one battery cell, and to use that at least one battery module to add other components to form a battery pack.

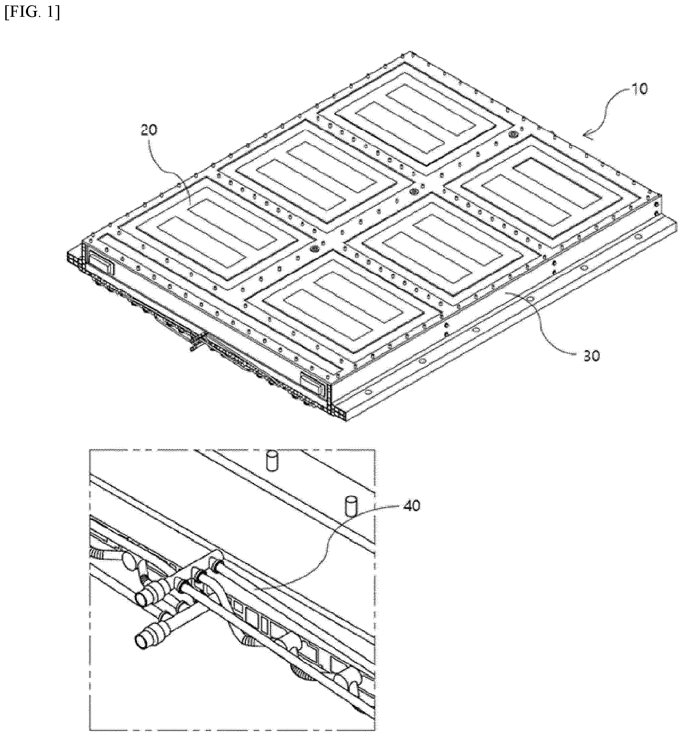

FIG. 1 is a simplified perspective view of a conventional battery pack 10, characterized in that it accommodates a plurality of battery modules M inside, and the top and side parts of the battery modules M are protected by a top cover 20 and a side wall 30, respectively.

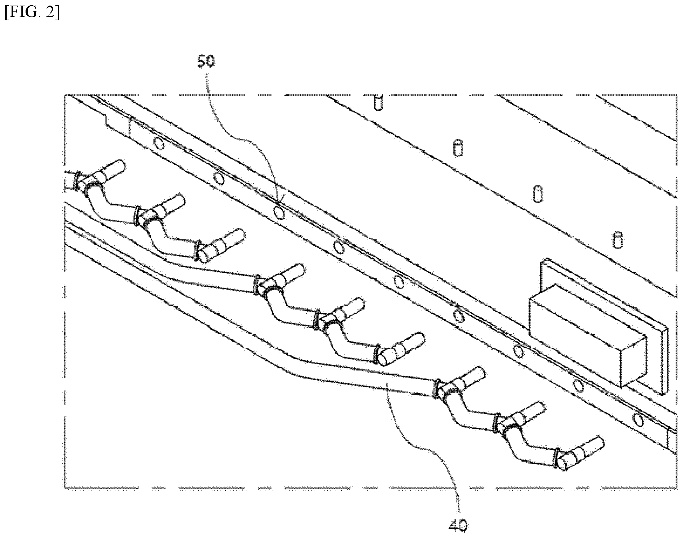

In the battery pack 10 in the above-mentioned form, since the battery module M is accommodated in a closed space, there is a risk that the internal space becomes hot in the process of repeated charging and discharging. Therefore, the conventional battery pack 10 connects the cooling water supplied through the cooling water supply pipe 40 with the cooling pipe inlet 50, as shown in FIG. 2, so that the lower part of the battery module M is continuously cooled by the cooling water. Since most of the heat generated inside the battery pack 10 is transferred to the bottom portion by conduction, this cooling method can be considered efficient.

However, even if cooling is provided in this manner, there are practical difficulties in preventing fires and explosions caused by thermal runaway phenomena in one of the battery modules M. In other words, since the thermal runaway occurs suddenly within a relatively short period of time, there are limitations in controlling it with the existing cooling system.

### [Related Art Document]

Korean Patent Laid-Open Publication No. 10-1916429

### [Disclosure]

### [Technical Problem]

Accordingly, the present invention was conceived to solve the above-mentioned problems, and is aimed at rapidly cooling a battery pack when thermal runaway occurs in the battery modules accommodated in the battery pack.

Other objects and advantages of the present invention will be understood from the following description, and will become apparent from the embodiments of the present invention. It will also be readily apparent that the objects and advantages of the present invention may be realized by the means and combinations thereof disclosed in the claims of the patent.

### [Technical Solution]

According to the present invention, a battery pack accommodating a battery module, including a pack case including a module area where a battery module is seated is provided, wherein the pack case includes a base plate having a form of a hollow with a hollow interior; and a side wall coupled along a border of the base plate, wherein the base plate has a high-pressure vaporized gas filled inside the hollow.

The base plate further may include: an open hole connected to the inside of the hollow; and a sealing member coupled to the open hole to seal the inside of the hollow.

The battery pack includes at least one of a temperature detecting sensor, a gas detecting sensor, and a pressure detecting sensor inside the pack case, wherein the sealing member may be removed from the open hole upon an event is detected by the detecting sensor.

The open hole may be formed on the side of the base plate.

The base plate includes: a plurality of separation walls extending along a longitudinal direction of the pack case inside the hollow, and spaced apart and coupled along a width direction of the pack case to compartmentalize the inside of the hollow; and a plurality of hollow holes compartmentalized and formed by the separation wall, wherein the open hole may be formed at a location connected to each of the hollow holes.

The pack case further includes: a main bulkhead formed across the center and coupled to the base plate, wherein the module area is formed at a position symmetrical to each other on both sides of the main bulkhead, wherein the hollow may include a first hollow formed on one side of the main bulkhead and a second hollow formed on the other side of the main bulkhead on the inside of the base plate.

The vaporized gas may have a gaseous state at room temperature.

The vaporized gas may be filled in a liquid state on the inside of the hollow of the base plate.

The vaporized gas may include carbon dioxide.

The base plate may include a plurality of cooling pipes formed by extending along a longitudinal direction of the pack case on the inside of the hollow.

### [Advantageous Effects]

According to the present invention, a battery pack can be rapidly cooled when thermal runaway occurs in an accommodated battery module to prevent a larger explosion and fire.

### [Brief Description of the Drawings]

FIG. 1 is a perspective view of a conventional battery pack.
FIG. 2 shows a portion of the battery pack of FIG. 1.
FIG. 3 is a perspective view of a pack case included in a battery pack according to a first embodiment of the present invention.
FIG. 4 is an enlarged view of a portion of FIG. 3.
FIG. 5 illustrates a cooling water supply pipe connected to the cooling pipe inlet of the pack case of FIG. 3.
FIG. 6 illustrates a cooling pipe inlet and an open hole included in a base plate.
FIG. 7 illustrates a pair of hollows included on the inside of a base plate.
FIG. 8 is a cross-sectional view of a battery pack of the present invention.
FIG. 9 is a perspective view of a pack case included in a battery pack according to a second embodiment of the present invention.
FIG. 10 is an enlarged view of a portion of FIG. 9.
FIG. 11 illustrates a cooling water supply pipe connected to the cooling pipe inlet of the pack case of FIG. 9.
FIG. 12 illustrates a cooling pipe inlet and an open hole included in a base plate.
FIG. 13 illustrates a plurality of hollow holes included on the inside of a base plate.

### [Best Mode for Carrying Out the Invention]

Hereinafter, preferred embodiments of the present invention will be described in detail with reference to the accompanying drawings. Before doing so, it should be noted that the terms and words used in this specification and claims are not to be construed in their ordinary or dictionary sense, but rather in a sense and concept consistent with the technical idea of the invention, based on the principle that the inventor may properly define the concept of a term to best describe his invention.

Accordingly, it is to be understood that the embodiments described herein and the configurations illustrated in the drawings are only the most preferred embodiments of the present invention and do not represent all of the technical ideas of the present invention, and that there may be various equivalents and variations that may be substituted for them at the time of filling the application.

In addition, in describing the present invention, detailed descriptions of related known configurations or features are omitted where it is determined that such detailed descriptions would obscure the essence of the present invention.

The embodiments of the present invention are provided to illustrate the invention more fully to those of ordinary skill in the art, and the shapes and sizes of the components in the drawings may be exaggerated, omitted, or shown schematically for clarity. Accordingly, the size or proportions of each component are not necessarily indicative of its actual size or proportions.

The present invention relates to a battery pack accommodating a battery module, characterized in that the battery pack can be rapidly cooled by vaporizing a vaporized gas filled at high pressure in the event of thermal runaway from the battery module accommodated therein.

The battery pack of the present invention includes a pack case including a module area in which a battery module is seated, and a top cover that is coupled to the pack case to cover the top part of the seated battery module.

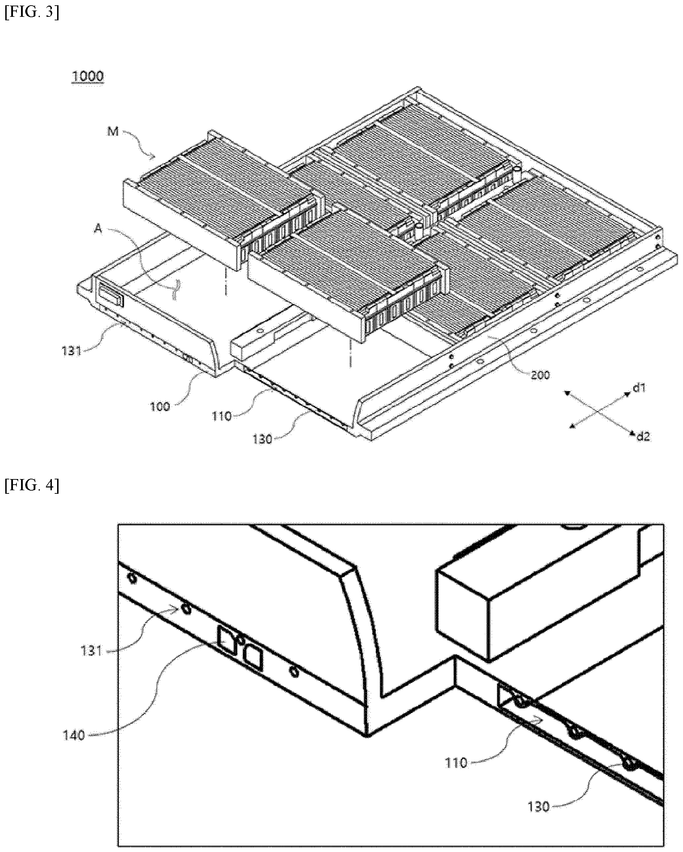

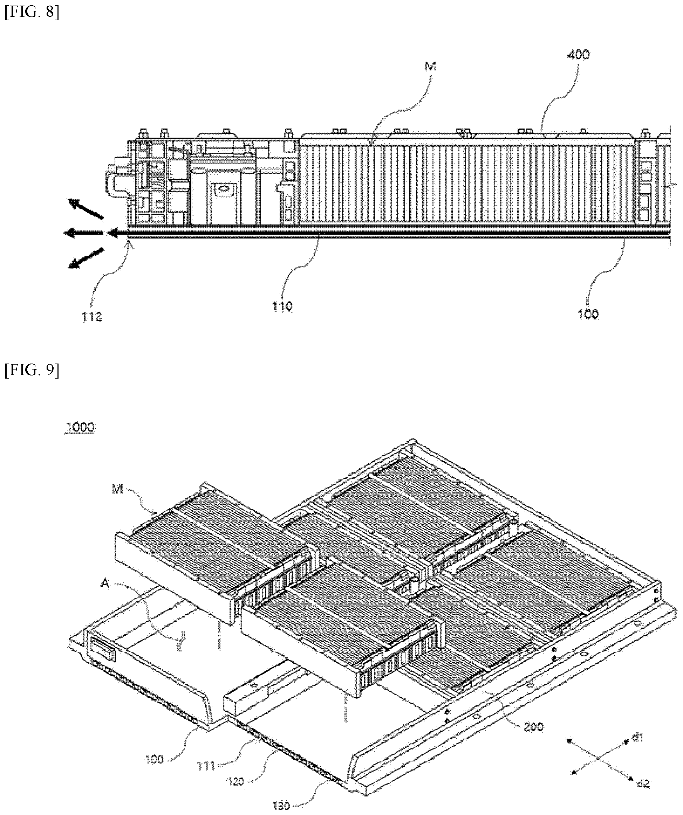

FIGS. 3 through 7 relate to a battery pack according to a first embodiment of the present invention, and FIGS. 8 through 11 relate to a battery pack according to a second embodiment of the present invention.

Hereinafter, each embodiment of the battery pack of the present invention will be described with reference to the drawings.

### (First embodiment)

FIG. 3 is a perspective view of a pack case 1000 included in a battery pack according to a first embodiment of the present invention, and FIG. 4 is an enlarged view of a portion of FIG. 3.

The pack case 1000 of the present invention includes a base plate 100 and a side wall 200, as shown in FIG. 3.

The base plate 100 serves to support the lower part of the battery module M, which is seated in the pack case 1000, and has the form of a hollow 110 with an empty inside.

The battery pack of the present invention may include a cooling pipe 130 through which cooling water from an external source flows to suppress and continuously cool the temperature of the pack case 1000 in which the battery module M is seated. The cooling pipe 130 is included in the base plate 100 on which the battery module M is seated.

The cooling pipe 130 is included within the hollow 110 of the base plate 100.

More specifically, the cooling pipe 130 is formed extending along a longitudinal direction d1 of the pack case 1000 and are spaced apart at predetermined distance along a width direction d2 of the pack case 1000.

One side of the base plate 100 includes a cooling pipe inlet 131 into which cooling water supplied from an external source is introduced, the cooling pipe inlet 131 being formed in correspondence with a position of the cooling pipe 130 to be connected to each cooling pipe 130.

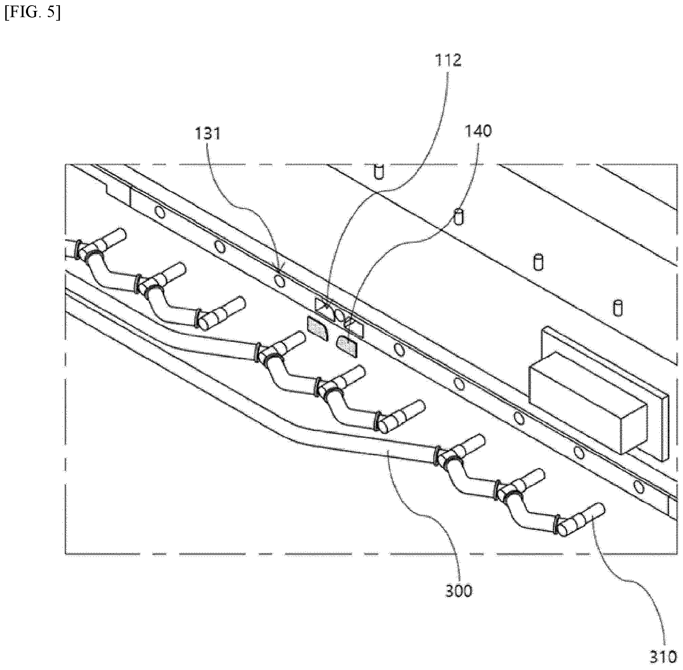

FIG. 5 illustrates a cooling water supply pipe 300 connected to the cooling pipe inlet 131 of the pack case 1000 of FIG. 3. Specifically, the cooling water supply pipe 300 may be coupled at its end with a connection member 310 that is inserted into the cooling pipe inlet 131 for supplying cooling water to each cooling pipe inlet 131. The connection member 310 connects the cooling water supply pipe 300 and the cooling pipe inlet 131 such that the cooling water supply pipe 300 and the cooling pipe 130 are connected to each other.

Thus, cooling water from the outside may flow through the cooling pipe 130 to cool the battery modules M seated on the top part of the base plate 100.

The side wall 200 is coupled along the edge of the base plate 100 to support the sides of all battery modules M seated in the module area A of the pack case 1000. The side wall can thus protect the battery modules M accommodated therein from external impacts, such as those applied to the sides of the battery pack.

The pack case 1000 of the present invention may further include a main bulkhead formed across the center and coupled to the base plate 100.

The module areas A are formed in positions symmetrical to each other on both sides of the main bulkhead, and may be plurally formed on each side of the main bulkhead, and battery modules M accommodated in the battery pack of the present invention may be seated side by side along the longitudinal direction d1 of the pack case 1000 on both sides of the main bulkhead.

The battery pack of the present invention is characterized in that a cooling pipe 130 is located inside the hollow 110 of the base plate 100, which is also filled with vaporized gas.

Inside the hollow 110 of the base plate 100, a cooling pipe 130 may be installed as shown in FIG. 4, and the space excluding the cooling pipe 130 may be filled with vaporized gas at a high pressure. At this time, the pressure is preferably applied to such an extent that the vaporized gas can be liquefied, and the vaporized gas is filled inside the hollow 110 of the base plate 100 in a liquid state.

The vaporized gas preferably includes a gas having a gaseous state at room temperature. More preferably, the vaporized gas includes carbon dioxide (CO₂).

The vaporized gas filled inside the hollow 110 in the liquid state may be released to the outside when an event occurs in the battery module M accommodated in the battery pack. For example, when a thermal runaway occurs in the battery module M, generating high-temperature gas or the like, causing the temperature of the entire battery pack to rise, the vaporized gas filled in the liquid state is released to the outside and absorbs the heat of the battery pack. Through the above-mentioned endothermic phenomenon, the battery pack of the present invention can be rapidly cooled in a thermal runaway situation of the accommodated battery module M.

One side of the base plate 100 further includes a cooling pipe inlet 131 and an open hole 112 open to be connected to the inside of the hollow 110, as shown in FIGS. 3 through 5.

The open hole 112 may be an inlet for filling the vaporized gas, and may be an outlet for releasing the filled vaporized gas. The open hole 112 may be coupled with a sealing member 140 for sealing the vaporized gas filled at high pressure.

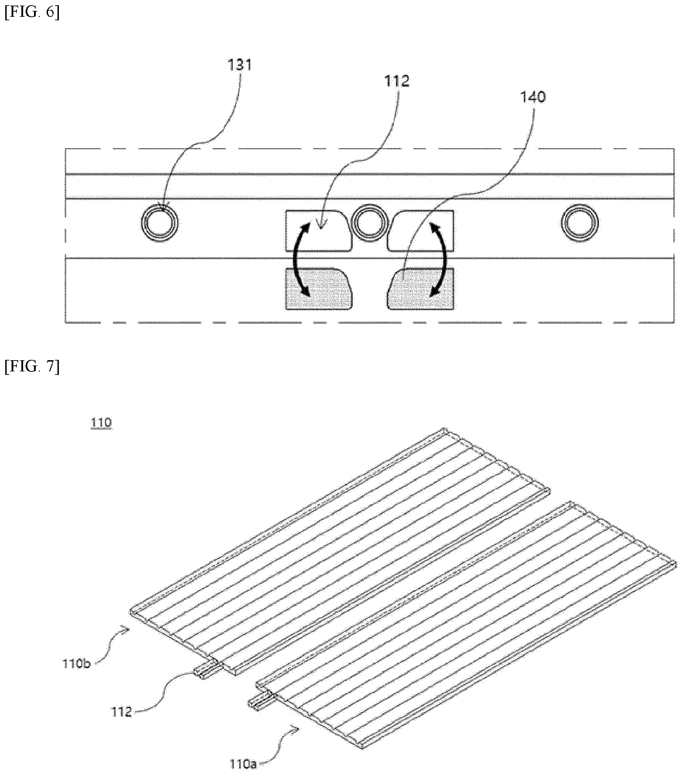

FIG. 6 illustrates a cooling pipe inlet 131 and an open hole 112 included in the base plate 100, wherein a sealing member 140 is seamlessly coupled to the open hole 112 to seal vaporized gas filled in the inner hollow 110 connected to the open hole 112 as shown in FIGS. 3 through 6.

The sealing member 140 is removed when thermal runaway occurs in the battery module M accommodated in the battery pack.

The battery pack of the present invention includes a detecting sensor (not shown) inside the pack case 1000, the detecting sensor detecting an event such as thermal runaway of the battery module M.

The detecting sensor may preferably be provided within the pack case 1000, and more specifically within the module area A of the pack case 1000.

The battery pack of the present invention may perform rapid cooling by removing the sealing member 140 coupled to the open hole 112 of the base plate 100 at the same time as the detecting sensor detects an event.

The detecting sensor includes at least one of a temperature detecting sensor for detecting a change in temperature inside the module area A, a gas detecting sensor for detecting a gas generated inside the module area A, and a pressure detecting sensor for detecting a change in pressure inside the module area A.

Upon an event is detected by the detecting sensor, the sealing member 140 may rupture, or it may be separated by protruding from the open hole 112.

Thus, as the sealing member 140 is removed, vaporized gas filled to a liquid state by high pressure is released through the open hole 112, causing an endothermic phenomenon to occur in all areas of the base plate 100.

The hollow 110 may be formed in pairs, one on each side relative to the center of the base plate 100.

FIG. 7 illustrates a pair of hollows 110 included on the inside of the base plate 100.

Specifically, the hollow 110 includes a first hollow 110a formed on one side of the main bulkhead and a second hollow 110b formed on the other side of the main bulkhead on the inside of the base plate 100, as shown in FIG. 7. Thus, vaporized gas may be filled into the first hollow 110a located on one side of the base plate 100 and the second hollow 110b located on the other side, respectively.

Each of the hollows 110 may be connected to at least one open hole 112.

The hollow 110 included in the battery pack according to the first embodiment of the present invention is formed as a space on one side of the center relative to the center of the base plate 100, and all of the filled vaporized gas is released as the sealing member 140 sealing the open hole 112 connected to the hollow 110 is removed.

FIG. 8 is a cross-sectional view of a battery pack of the present invention, showing a partial cross-section when the battery pack is cut along a longitudinal direction d1 of the pack case 1000.

The arrows in FIG. 8 indicate the direction in which liquid-state vaporized gas travels and is released when the sealing member 140 of the open hole 112 is removed.

The vaporized gas is released in the direction shown in FIG. 8 and may rapidly cool the module area A located in the top part of the corresponding hollow 110 and the battery module M seated in the module area A.

Since the top cover 400 of the present invention falls within the prior art, a detailed description thereof will be omitted.

### (Second embodiment)

The battery pack of the present invention may have hollows 110 separated into a plurality within the base plate 100 to be independent of each other, and each separated hollow 110 may be formed with an open hole 112 individually connected to each other.

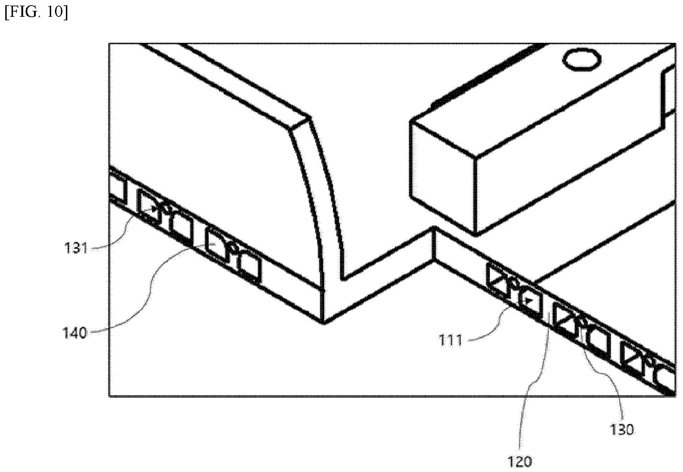

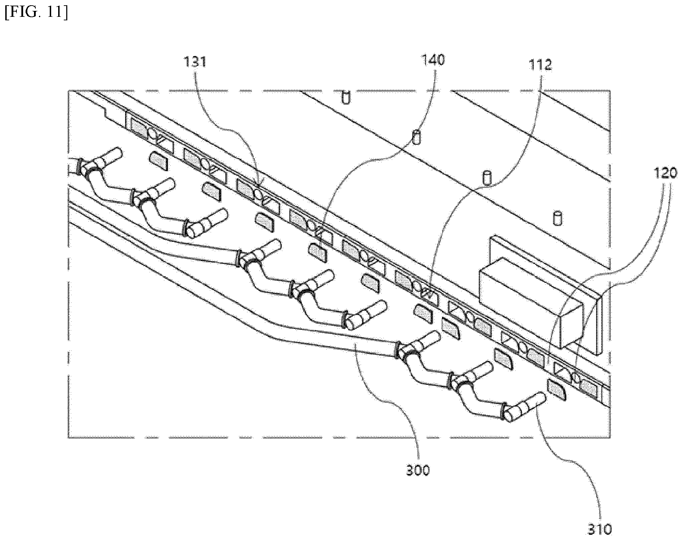

FIG. 9 is a perspective view of a pack case 1000 included in a battery pack according to a second embodiment of the present invention, FIG. 10 is an enlarged view of a portion of FIG. 9, and FIG. 11 shows a cooling water supply pipe 300 connected to a cooling pipe inlet 131 of the pack case 1000 of FIG. 9.

The pack case 1000 of the present invention includes a base plate 100 and a side wall 200, as shown in FIG. 9.

The base plate 100 serves to support the lower part of the battery module M, which is seated in the pack case 1000, and has the form of a hollow 110 with an empty inside.

The battery pack of the present invention may include a cooling pipe 130 through which cooling water from an external source flows to suppress and continuously cool the temperature of the pack case 1000 in which the battery module M is seated. The cooling pipe 130 is included in the base plate 100 on which the battery module M is seated.

The cooling pipe 130 is included within the hollow 110 of the base plate 100.

More specifically, the cooling pipe 130 is formed extending along a longitudinal direction d1 of the pack case 1000 and are spaced apart at predetermined distance along a width direction d2 of the pack case 1000.

One side of the base plate 100 includes a cooling pipe inlet 131 into which cooling water supplied from an external source is introduced, the cooling pipe inlet 131 being formed in correspondence with a position of the cooling pipe 130 to be connected to each cooling pipe 130.

The cooling water supply pipe 300 may be coupled at its ends with a connection member 310 inserted into the cooling pipe inlet 131 for supplying cooling water to each cooling pipe inlet 131. The connection member 310 connects the cooling water supply pipe 300 and the cooling pipe inlet 131 so that the cooling water supply pipe 300 and the cooling pipe 130 are connected to each other.

Thus, cooling water flowing from the outside may flow through the cooling pipe 130 to cool the battery module M seated on the top part of the base plate 100.

The side wall 200 is coupled along the edge of the base plate 100 to support the sides of all battery modules M seated in the module area A of the pack case 1000. The side wall 200 may thus protect the battery modules M accommodated therein from external impacts, such as those applied to the sides of the battery pack.

The pack case 1000 of the present invention may further include a main bulkhead formed across the center and coupled to the base plate 100.

The module areas A are formed in positions symmetrical to each other on both sides of the main bulkhead, and may be plurally formed on each side of the main bulkhead, and battery modules M accommodated in the battery pack of the present invention may be seated side by side along the longitudinal direction d1 of the pack case 1000 on both sides of the main bulkhead.

The battery pack of the present invention not only has a cooling pipe 130 located inside the hollow 110 of the base plate 100, as shown in FIG. 10, but is also filled with vaporized gas.

Inside the hollow 110 of the base plate 100, a cooling pipe 130 may be installed as shown in FIG. 10, and the space excluding the cooling pipe 130 may be filled with vaporized gas at a high pressure. At this time, the pressure is preferably applied to such an extent that the vaporized gas can be liquefied, and the vaporized gas is filled inside the hollow 110 of the base plate 100 in a liquid state.

The vaporized gas preferably includes a gas having a gaseous state at room temperature. More preferably, the vaporizes gas includes carbon dioxide (CO₂).

The vaporized gas filled inside the hollow 110 in the liquid state may be released to the outside when an event occurs in the battery module M accommodated in the battery pack. For example, when a thermal runaway occurs in the battery module M, generating high-temperature gas or the like, causing the temperature of the entire battery pack to rise, the vaporized gas filled in the liquid state is released to the outside and absorbs the heat of the battery pack. Through the above-mentioned endothermic phenomenon, the battery pack of the present invention may be rapidly cooled in a thermal runaway situation of the accommodated battery module M.

One side of the base plate 100 further includes a cooling pipe inlet 131 and an open hole 112 open to be connected to the inside of the hollow 110, as shown in FIGS. 9 through 11.

The open hole 112 may be an inlet for filling the vaporized gas, and may be an outlet for releasing the filled vaporized gas. The open hole 112 may be coupled with a sealing member 140 for sealing the vaporized gas filled with a high pressure.

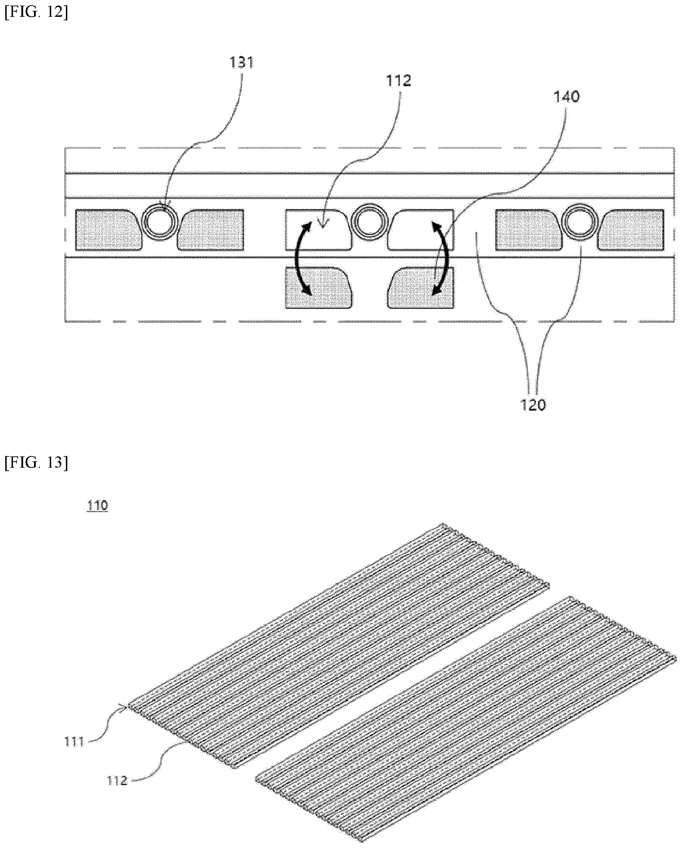

FIG. 12 illustrates a cooling pipe inlet 131 and an open hole 112 included in the base plate 100, wherein a sealing member 140 is seamlessly coupled to the open hole 112 as shown in FIGS. 9 through 12 to seal the vaporized gas filled in the inner hollow 110 connected to the open hole 112.

The sealing member 140 is removed when thermal runaway occurs in the battery module M accommodated in the battery pack.

The battery pack of the present invention includes a detecting sensor (not shown) inside the pack case 1000, the detecting sensor detecting an event such as thermal runaway of the battery module M.

The detecting sensor may preferably be provided within the pack case 1000, and more specifically within the module area A of the pack case 1000.

The battery pack of the present invention may perform rapid cooling by removing the sealing member 140 coupled to the open hole 112 of the base plate 100 at the same time as the detecting sensor detects an event.

The detecting sensor includes at least one of a temperature detecting sensor for detecting a change in temperature inside the module area A, a gas detecting sensor for detecting a gas generated inside the module area A, and a pressure detecting sensor for detecting a change in pressure inside the module area A.

Upon an event is detected by the detecting sensor, the sealing member 140 may rupture, or it may be separated by protruding from the open hole 112.

Thus, as the sealing member 140 is removed, vaporized gas filled to a liquid state by high pressure is released through the open hole 112, causing an endothermic phenomenon to occur in all areas of the base plate 100.

In particular, the battery pack according to the second embodiment of the invention is characterized in that it includes a plurality of separation walls 120 that compartmentalize a hollow 110 inside the base plate 100 in the width direction d2 of the pack case 1000, and a plurality of hollow holes 111 that are compartmentalized and formed by the separation walls 120.

The separation wall 120 may be disposed between a pair of cooling pipes 130 formed at the cooling pipe locations and being adjacent as shown in FIGS. 10 through 12 to compartmentalize the hollow 110 space.

FIG. 13 illustrates a plurality of hollow holes 111 included within the base plate 100.

The hollow holes 111 are formed by being spaced apart at predetermined distance as shown in FIG. 13. More specifically, the hollow holes 111 included in the battery pack according to the second embodiment are those in which the inside of a first hollow 110a and a second hollow 110b included in the battery pack according to the first embodiment are compartmentalized by a plurality of separation walls 120, such that one hollow hole 111 may be formed with a corresponding one open hole 112, and each open hole 112 may be coupled with a sealing member 140 as shown in FIGS. 11 and 12.

Thus, by including a plurality of hollow holes 111 filled with vaporized gas, a battery pack according to the second embodiment of the present invention is capable of rapidly cooling more detailed areas by optionally removing sealing members 140 corresponding to the hollow holes 111.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

### [Reference numerals]

10: (CONVENTIONAL ART) BATTERY PACK
20: (CONVENTIONAL ART) TOP COVER
30: (CONVENTIONAL ART) SIDE WALL
40: (CONVENTIONAL ART) COOLING WATER SUPPLY PIPE
50: (CONVENTIONAL ART) COOLING PIPE INLET
1000: PACK CASE
100: BASE PLATE
110: HOLLOW
110a: FIRST HOLLOW
110b: SECOND HOLLOW
111: HOLLOW HOLE
112: OPEN HOLE
120: SEPARATION WALL
130: COOLING PIPE
131: COOLING PIPE INLET
140: SEALING MEMBER
200: SIDE WALL
300: COOLING WATER SUPPLY PIPE
310: CONNECTION MEMBER
400: TOP COVER
A: MODULE AREA
M: BATTERY MODULE
d1: LONGITUDINAL DIRECTION
d2: WIDTH DIRECTION

## Claims

1. A battery pack accommodating a battery module, comprising:
a pack case including a module area where a battery module is seated, wherein
the pack case comprises
a base plate having a form of a hollow with a hollow interior; and
a side wall coupled along a border of the base plate, wherein
the base plate has a high-pressure vaporized gas filled inside the hollow.

2. The battery pack of claim 1, wherein
the base plate further comprises:
an open hole connected to the inside of the hollow; and
a sealing member coupled to the open hole to seal the inside of the hollow.

3. The battery pack of claim 2, wherein
the battery pack comprises at least one of a temperature detecting sensor, a gas detecting sensor, and a pressure detecting sensor inside the pack case, wherein
the sealing member is removed from the open hole upon an event is detected by the detecting sensor.

4. The battery pack of claim 2, wherein
the open hole is formed on the side of the base plate.

5. The battery pack of claim 2, wherein
the base plate comprises:
a plurality of separation walls extending along a longitudinal direction of the pack case inside the hollow, and spaced apart and coupled along a width direction of the pack case to compartmentalize the inside of the hollow; and
a plurality of hollow holes compartmentalized and formed by the separation wall, wherein
the open hole is formed at a location connected to each of the hollow holes.

6. The battery pack of claim 1, wherein
the pack case further comprises: a main bulkhead formed across the center of the base plate and coupled to the base plate, wherein
the module area is formed at a position symmetrical to each other on both sides of the main bulkhead, wherein
the hollow comprises a first hollow formed on one side of the main bulkhead and a second hollow formed on the other side of the main bulkhead on the inside of the base plate.

7. The battery pack of claim 1, wherein
the vaporized gas has a gaseous state at room temperature.

8. The battery pack of claim 1, wherein
the vaporized gas is filled in a liquid state on the inside of the hollow of the base plate.

9. The battery pack of claim 1, wherein
the vaporized gas includes carbon dioxide.

10. The battery pack of claim 1, wherein
the base plate includes a plurality of cooling pipes formed by extending along a longitudinal direction of the pack case on the inside of the hollow.
